# EUROPEAN PATENT SPECIFICATION

(11) **EP 2 764 924 B1**
(45) Date of publication and mention of the grant of the patent: **28.03.2018**
(21) Application number: 13003993.6
(22) Date of filing: 09.08.2013
(51) Int. Cl.: B05B 7/04, B05B 15/02, E03C 1/08, F16K 15/14, F16K 17/04, B05B 1/18

(54) **A suction and explosion proof mechanism for a waterway accessory**
Saug- und explosionsgeschützter Mechanismus für Wasserwegzubehör
Mécanisme antidéflagrant et d'aspiration pour un accessoire de voie d'eau

(30) Priority: 06.02.2013 CN 201310048431
(43) Date of publication of application: 13.08.2014
(73) Proprietor: Xiamen Solex High-Tech Industries Co., Ltd., Xiamen Area of China (Fujian) Pilot Free Trade Zone (CN)
(72) Inventor: Wu, Yulin, Fujian 361000 (CN); Chen, Jianmin, Fujian 361000 (CN); Cao, Bin, Fujian 361000 (CN); Zhou, Huasong, Xiamen Area of China (Fujian) Pilot Free Trade Zone (CN)
(74) Representative: Verscht, Thomas Kurt Albert

(56) References cited:
- WO-A1-2011/140958
- CN-A- 102 671 791
- DE-A1-102007 058 835
- US-A1- 2012 080 097

## Description

### Field of the invention

The present invention relates to a suction and explosion proof mechanism for a waterway accessory.

### Background of the invention

US 2012/0080097 A1 describes an air intake module of a water feeding apparatus, which includes a body and a valve. The body includes a water inlet channel and a water outlet channel. Moreover, an air intake hole runs through the body outward from a joint between the water inlet channel and the water outlet channel and a valve is disposed at the joint. With the change of a cross-sectional area of the joint, a phenomenon of a high flow rate and a low pressure occurs to force the a valve plate open and air is sucked in mixed with the water flow. When a back pressure of the water flow is larger than an atmospheric pressure outside, the valve plate is forced to close the air intake hole, so as to avoid leakage of the water flow and prevent the air intake hole from being clogged impurities.

CN 102671791A describes an anti-explosion ball head. The anti-explosion ball head comprises a ball head body, a valve body and a pressure release unit, wherein the ball head body is provided with a waterway and a water discharge hole running through inside and outside the waterway. Moreover, the waterway is provided with a water inlet and a water outlet. A pressure release unit is mounted inside the valve body and at least comprises a sealing member and an elastic member used for ejecting the sealing member to enable the sealing member to seal one port of the water outlet channel.

The existing outlet products, showers or kitchen outlet for example, are disposed with suction mechanism for water saving and shower experience improvement; in another hand, when the outlet product is blocked, the water pressure inside the waterway increases continuously, and when reaching a certain extent, the outlet product may be damaged if water and pressure are not discharged. Especially the rain type shower with large area, the inner pressure is huge, the shower may be broken and fell down to hurt human. So it's necessary to dispose explosion proof mechanism in the outlet product. The structure is complex, large size and high cost if disposed both suction mechanism and explosion proof mechanism in an outlet product.

### Summary of the invention

The present invention is provided with a suction and explosion proof mechanism for a waterway accessory, which overcomes the disadvantages of the existing outlet products.

One technical proposal of the present invention to solve the technical problem is as below:
A suction and explosion proof mechanism for a waterway accessory according to the subject-matter of claim 1..

In another preferred embodiment, an elastic body is disposed between the fixation unit and the sealing unit, the elastic body is withstood the sealing unit to generate elastic force on the sealing unit, and the force direction is from the explosion proof section to the suction section.

In another preferred embodiment, the fixation part is disposed with an inlet pipe and a housing, the inlet pipe is disposed inside the housing, a clearance is disposed between the inlet pipe and the housing; the housing is disposed with a first throughout hole inside and outside, the inlet pipe is formed to be the waterway, the inlet pipe is disposed with a second throughout hole inside and outside, the channel includes the second throughout hole, the first throughout hole and part of the clearance; the sealing unit slides along the clearance.

In another preferred embodiment, the sealing unit includes an annular base and a deformable annular sealing, the annular sealing is assembled in the annular base, the inner periphery of the annular sealing seals the outer wall of the inlet pipe, the outer periphery of the annular sealing is extended out of the outer revolution surface of the annular base and seals the inner wall of the housing.

In another preferred embodiment, the fixation part further includes an inlet sleeve, which is connected between the inlet pipe and the housing, the elastic body is withstood between the annular base and the inlet sleeve.

In another preferred embodiment, the inner wall of the housing is disposed with a first conical surface of small end down, the outer wall of the annular base is disposed with a second conical surface, the first conical surface is parallel to the second conical surface.

In another preferred embodiment, the lower end face of the annular base is disposed with a revolution groove, the annular sealing is packing leather, the packing leather is assembled inside the revolution groove and the outer periphery of the packing leather is extended out of the lower of the annular base.

In another preferred embodiment, the outer port of the first throughout hole is the first port; the fixation part further includes an external check ring, the upper periphery of the external check ring is extended inward to form a connection ring, which is fixed in the outer revolution of the housing, and the first port is situated below the connection ring and inside the external check ring.

In another preferred embodiment, the housing includes a column section and a sphere section below the column section.

Another technical proposal of the present invention to solve the technical problems as below:
A suction and explosion proof mechanism for a waterway accessory according to the subject-matter of claim 10.

Compared to the existing technology, the technical proposal of the present invention has advantages as below:
1. When the waterway is open, the sealing unit is situated in the suction section, negative pressure generates in the mutation cavity and works on the sealing unit to make the sealing unit deformed, then the waterway is open to realize suction; when the waterway is blocked, pressure in the waterway increases and works on the sealing unit to make the sealing unit moving from the suction section to the explosion proof section, then the waterway is open for water and pressure discharge, the suction function and explosion proof function is combined skillfully. So that suction makes it with water saving and shower experience, also explosion proof function, preventing from hurting people due to overpressure of the outlet products, the present invention is simple structural, less components, low cost and small size.
2. The channel includes a first throughout hole, a second throughout hole and part of the clearance, the sealing unit moves along the clearance, it makes sure that the water discharge area of the channel is large enough when the sealing unit is situated in the explosion proof section, when the sealing unit is situated in the suction section, with the negative pressure on the sealing unit, the sealing unit is deformed to the first state to make the channel open, the channel is open by the deform of the sealing unit, the air discharge area is controlled and reduced, the structure is simple and suitable.
3. The outer periphery of the annular sealing is extended out of the outer revolution surface of the annular seat and seals the inner wall of the housing, so that: a. negative pressure works on the sealing unit to make the outer of the annular sealing inside shrinking and deformed, then the channel is open; b. the inside pressure increases (larger than the negative pressure and smaller than the preset value, the inside pressure is not large enough to make the sealing unit moving from the suction section to the explosion proof section), the inside pressure works on the sealing unit to make the outer of the annular sealing turning outwards to close the channel, realizing water non return and discharge, water flow is stopped; c. when the inside pressure is larger than the preset value, it pushes the sealing unit to move from the suction section to the explosion proof section, and the annular sealing turns outwards to open the channel to water and pressure discharge for a moment, the present invention responses well with strong water discharge force and high security.
4. The inner wall of the housing is disposed with a first conical surface, the outer wall of the annular seat is disposed with a second conical surface, the first conical surface is parallel to the second conical surface with guide effect, it makes sure that the sealing unit can slide to the explosion proof section when in blocking situation.
5. with With external check ring, water discharged from the channel flows out through the clearance of the external check ring and the housing, preventing water spraying out in the radial direction to damage the equipments in the bathroom or the kitchen, the present invention is provided with high security and clean.

### Brief description of the drawings

The present invention will be further described with the embodiments and drawings.
Fig. 1 illustrates the structure of a preferred embodiment of the present invention.
Fig. 2 illustrates the structure of a preferred embodiment of the present invention in another view.
Fig. 3 illustrates the breakdown structure of a preferred embodiment of the present invention.
Fig. 4 illustrates the sectional view of a preferred embodiment of the present invention in suction state.
Fig. 5 illustrates the sectional view of a preferred embodiment of the present invention in explosion proof state.
Fig. 6 illustrates the partial breakdown structure of the water pipe, the sealing unit and the elastic body of a preferred embodiment of the present invention.

### Detailed description of the embodiments

A suction and explosion proof mechanism for a waterway accessory can be directly applied as an outlet terminal or a part of outlet products, such as the connection part between the rain type shower and the water resource. The drawings illustrate the connection part between the rain type shower and the water resource.

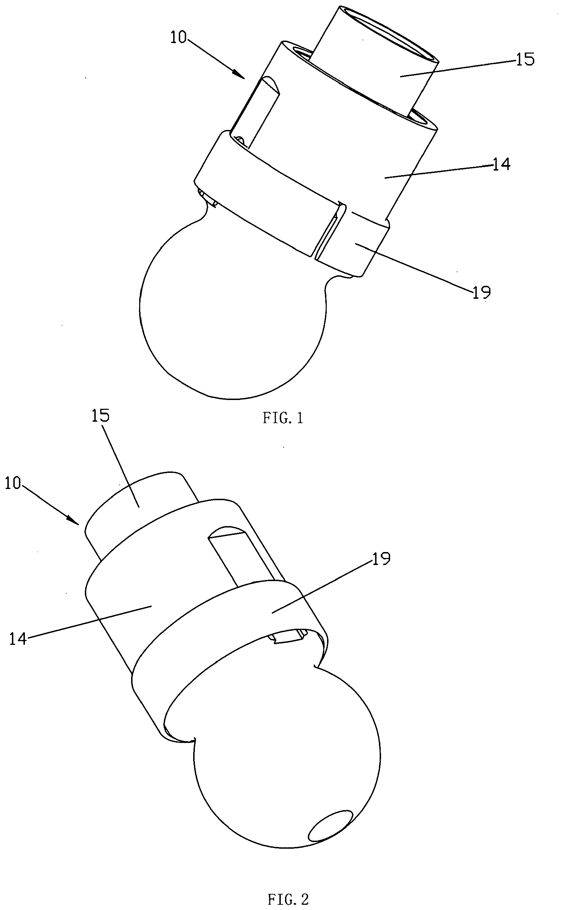

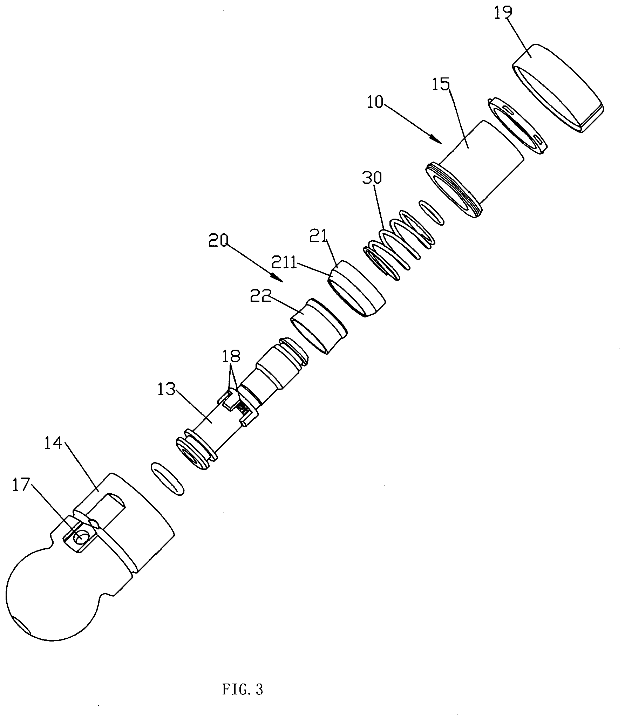

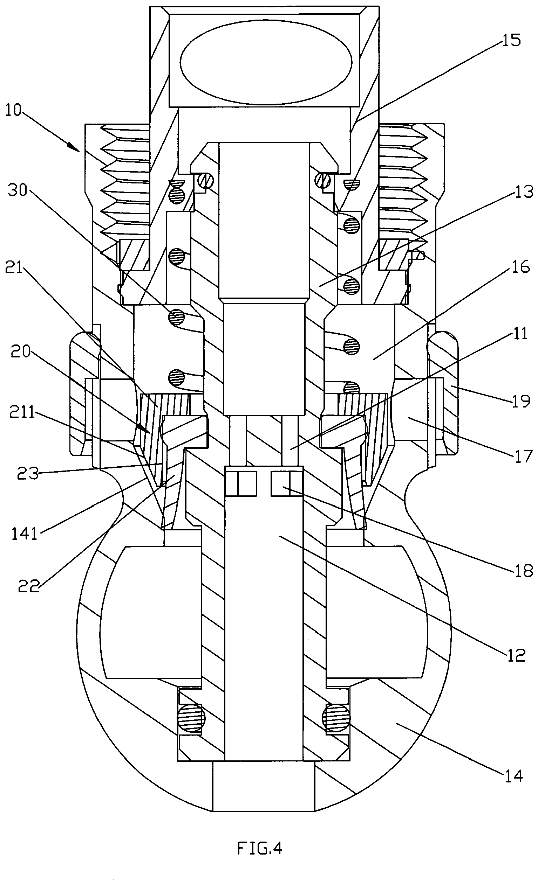

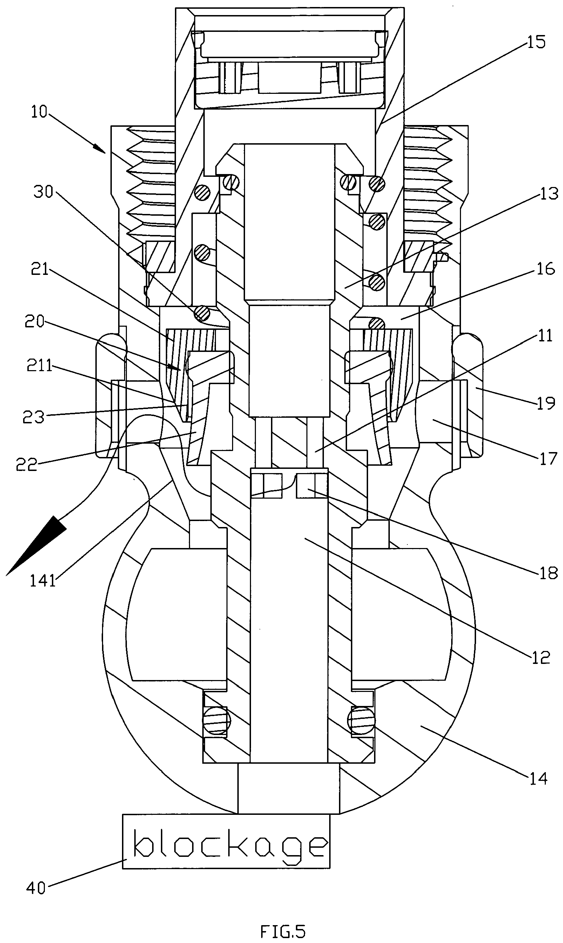

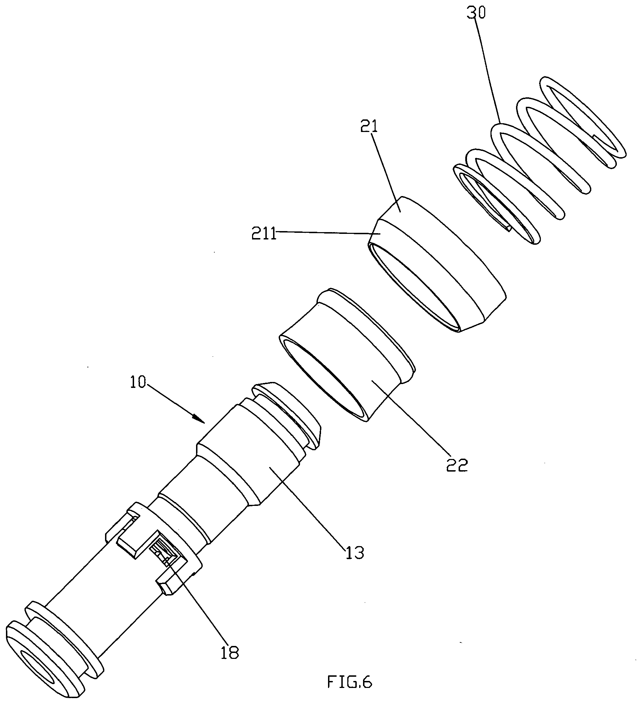

Please refer to Fig.1 to Fig.6. A suction and explosion proof mechanism for a waterway accessory includes a fixation part 10, which is disposed with a waterway and several channels, the waterway is disposed with at least an inlet hole 11 and a mutation cavity 12 connected to the inlet hole 11, the sectional area of the mutation cavity 12 is larger than that of the inlet hole 11; the channel is disposed with a first port and a second port, the first port is connected to the outside of the fixation part 10, the second port is situated in the mutation cavity 12.

In this embodiment, the fixation part 10 includes an inlet pipe 13, a housing 14 and an inlet sleeve 15, the inlet pipe 13 is inside the housing 14 and a clearance 16 is disposed between the inlet pipe 13 and the housing 14, the inlet sleeve 15 is connected between the inlet pipe 13 and the housing 14 and seals the upper part of the clearance 16. The lower of the housing 14 and the lower of the inlet pipe 13 are contacted together in a sealing way. In this embodiment, the housing 14 includes a column section and a sphere section below the column section, the lower of the inlet pipe 13 is extended outward to form a sealing ring, the sealing ring is connected to the inner wall of the column section, the inner wall of the column section and the inlet sleeve 15 are formed an annular space, and the inner wall of the column section is threaded to connect to the external water source in a thread way.

The housing 14 is disposed with several first throughout holes 17 throughout inside and outside in an annular, the inside of the inlet pipe 13 forms the waterway, the inlet pipe 13 is disposed with several second throughout holes 18 throughout inside and outside in an annular, the above channel includes the second throughout holes 17, the first throughout holes 18 and part of the clearance 16, the external port of the first throughout hole 17 is the first port, the inner port of the second throughout hole 18 is the second port.

The channel is connected to a sealing unit 20, which can be deformed and movably connected to the fixation part 10 inside, the sealing unit 20 can move between the explosion proof section and the suction section, thereinto: when the sealing unit 20 is situated in the explosion proof section, the channel is open and the discharge area is large; when the sealing unit is situated in the suction section and in the initial state, the channel is closed or open in a small area, when the sealing unit 20 is situated in the first deform state, the channel is open, the open area is smaller than the open area in the explosion proof section, in this embodiment, the above function can be realized by changing the sectional area of the channel or by applying above structure of this embodiment. The sealing unit 20 slides along the clearance 16, the difference is compared from above two. When the waterway is open and the sealing unit 20 is situated in the suction section, negative pressure generates in the mutation cavity 12 and works on the sealing unit 20 to make the sealing unit 20 deformed and situated in the first deform state, the channel is open for suction; when the waterway is blocked, pressure increases inside the waterway and works on the sealing unit 20 to making the sealing unit 20 moving from the suction unit and the explosion proof section, the channel is open for water and pressure discharge.

In this embodiment, the sealing unit 20 includes an annular seat 21 and a deformable annular sealing 22, the annular sealing 22 is assembled in the annular seat 21, the inner periphery of the annular sealing 22 seals the outer wall of the inlet pipe 13, the outer periphery of the annular sealing 22 is extended out of the outer revolution surface of the annular seat 21 and seals the inner wall of the housing 14. The lower end of the annular seat 21 is disposed with a revolution groove 23, the annular sealing 22 is packing leather, which is assembled inside the revolution groove 23, the outer periphery of the packing leather 22 is extended out of the lower of the annular seat 21. An elastic body 30 is disposed between the annular seat and the inlet pipe 15, the elastic body 30 is withstood the annular seat 21 to work on the sealing unit, the direction of the elastic force is from the explosion proof section to the suction section. In this embodiment, the inner wall of the housing 14 is disposed with a first conical surface 141 of small end down, the outer wall of the annular seat is disposed with a second conical surface 211, the first conical surface 141 is parallel to the second conical surface 211.

In this embodiment, the fixation part 10 further includes an external check ring 19, the upper periphery of which is extended inward to form a connection ring, the connection ring is fixed to the outer revolution surface of the housing 14 and the first port is situated below the connection ring inside the external check ring.

When the waterway is open, negative pressure works on the annular sealing to make the outer of the annular sealing shrinking inside, then the channel is open, when the waterway is partial blocked, the inner pressure increases (larger than the negative pressure and smaller than the preset value, the pressure is not large enough to push the sealing unit to move from the suction section to explosion proof section), the inner pressure works on the sealing unit to make the outer of the annular sealing expanded to contact the inner wall of the housing 14 to close the channel for non return and water discharge, water can't flow out of the channel; when the waterway is mostly blocked by a blockage 40, the inner pressure is larger than the preset value to push the sealing unit to move from the suction section to explosion proof section, and the annular sealing is turning outwards to open the channel to water and pressure discharge for a moment. To describe the activity of the sealing unit clearly, the deforming of the packing leather is not figured out.

In another preferred embodiment, the difference from above embodiment is as below: The channel is connected with a sealing unit, the sealing unit is movably connected inside the fixation part and it can move between the explosion proof section and the suction section, a middle section is disposed between the explosion proof section and the suction section; when the waterway is open, negative pressure generates in the mutation section and works on the sealing unit to make the sealing unit moving from the middle section to the suction section, the channel is open for suction; when the waterway is blocked, the pressure of the waterway increases and works on the sealing unit to make the sealing unit moving from the suction unit to explosion proof section, the channel is open to realize water and pressure discharge. By setting the sectional area of the channel, the channel is closed when the sealing unit is in the middle section, and the channel is open and the air discharge area is small when the sealing unit is in the suction section, the channel is open and the water discharge area is large enough when the sealing unit is in the explosion proof section. As request, an elastic body is disposed between the fixation part and the sealing unit, when the sealing unit is situated in a balance state under the work of the elastic force of the elastic body, the gravity itself or the friction, the sealing unit is situated in the middle section.

The present invention may be summarized as follows: The present invention is provided with a suction and explosion proof mechanism for a waterway accessory comprising a fixation part, which is disposed with a waterway and at least a channel, the waterway is disposed with at least an inlet hole and a mutation cavity connected to the inlet hole, the sectional area of the mutation cavity is larger than that of the inlet hole; the channel is disposed with a first port and a second port, the first port is connected to the outside of the fixation part, the second port is situated in the mutation cavity; wherein the fixation part is at least disposed with an explosion proof section and a suction section, the channel is disposed with a sealing unit, the sealing unit is deformable and movably disposed inside the fixation part, the sealing unit can move between the explosion proof section and the suction section; when the waterway is open, the sealing unit is situated in the suction section, negative pressure generates inside the mutation cavity and works on the sealing unit to make the sealing unit deformed, the channel is open for suction; when the waterway is blocked, the pressure of the waterway increases and woks on the sealing unit and the channel is open to realize water and pressure discharge when the sealing unit moves from the suction section to the explosion proof section. The suction function and explosion proof function is combined skillfully. So that suction makes it with water saving and shower experience, also explosion proof function.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. A suction and explosion proof mechanism for a waterway accessory comprising a fixation part (10), which is disposed with a waterway and at least a channel, the waterway is disposed with at least an inlet hole (11) and a mutation cavity (12) connected to the inlet hole (11), the sectional area of the mutation cavity (12) is larger than that of the inlet hole (11); the channel is disposed with a first port and a second port, the first port is connected to the outside of the fixation part (10), the second port is situated in the mutation cavity (12); **characterized in that** the fixation part (10) is at least disposed with an explosion proof section and a suction section,
wherein the channel is disposed with a sealing unit (20), the sealing unit (20) is deformable and movably disposed inside the fixation part (10), the sealing unit (20) can move between the explosion proof section and the suction section;
when the waterway is open, the sealing unit (20) is situated in the suction section, negative pressure generates inside the mutation cavity (12) and works on the sealing unit (20) to make the sealing unit (20) deformed, the channel is open for suction,
wherein the channel has a first open area;
when the waterway is blocked, the pressure of the waterway increases and works on the sealing unit (20) and the channel is open to realize water and pressure discharge
when the sealing unit (20) moves from the suction section to the explosion proof section, wherein the channel has a second open area;
and wherein the first open area is smaller than the second open area.

2. A suction and explosion proof mechanism for a waterway accessory according to claim 1, wherein an elastic body (30) is disposed between the fixation unit and the sealing unit (20), the elastic body (30) is withstood the sealing unit (20) to generate elastic force on the sealing unit (20), and the force direction is from the explosion proof section to the suction section.

3. A suction and explosion proof mechanism for a waterway accessory according to claim 1 and/or 2, wherein the fixation part (10) is disposed with an inlet pipe (13) and a housing (14), the inlet pipe (13) is disposed inside the housing (14), a clearance (16) is disposed between the inlet pipe (13) and the housing (14); the housing (14) is disposed with a first throughout hole (17) inside and outside, the inlet pipe (13) is formed to be the waterway, the inlet pipe (13) is disposed with a second throughout hole (18) inside and outside, the channel includes the second throughout hole (18), the first throughout hole (17) and part of the clearance (16); the sealing unit (20) slides along the clearance (16).

4. A suction and explosion proof mechanism for a waterway accessory according to claim 3, wherein the sealing unit (20) includes an annular base and a deformable annular sealing (22), the annular sealing (22) is assembled in the annular base, the inner periphery of the annular sealing (22) seals the outer wall of the inlet pipe (13), the outer periphery of the annular sealing (22) is extended out of the outer revolution surface of the annular base and seals the inner wall of the housing (14).

5. A suction and explosion proof mechanism for a waterway accessory according to claim 3 and/or 4, wherein the fixation part (10) further includes an inlet sleeve (15), which is connected between the inlet pipe (13) and the housing (14), the elastic body (30) is withstood between the annular base and the inlet sleeve (15).

6. A suction and explosion proof mechanism for a waterway accessory according to any one or more of claims 3 to 5, wherein the inner wall of the housing (14) is disposed with a first conical surface (141) of small end down, the outer wall of the annular base is disposed with a second conical surface (211), the first conical surface (141) is parallel to the second conical surface (211).

7. A suction and explosion proof mechanism for a waterway accessory according to any one or more of claims 4 to 6, wherein the lower end face of the annular base is disposed with a revolution groove (23), the annular sealing (22) is packing leather, the packing leather is assembled inside the revolution groove (23) and the outer periphery of the packing leather is extended out of the lower of the annular base.

8. A suction and explosion proof mechanism for a waterway accessory according to claim 3, claim 4, claim 5, claim 6 and/or claim 7, wherein the outer port of the first throughout hole (17) is the first port; the fixation part (10) further includes an external check ring (19), the upper periphery of the external check ring (19) is extended inward to form a connection ring, which is fixed in the outer revolution of the housing (14), and the first port is situated below the connection ring and inside the external check ring (19).

9. A suction and explosion proof mechanism for a waterway accessory according to claim 3, claim 4, claim 5, claim 6 and/or claim 7, wherein the housing (14) includes a column section and a sphere section below the column section.

10. A suction and explosion proof mechanism for a waterway accessory comprising a fixation part (10), which is disposed with a waterway and at least a channel, the waterway is disposed with at least an inlet hole (11) and a mutation cavity (12) connected to the inlet hole (11), the sectional area of the mutation cavity (12) is larger than that of the inlet hole (11); the channel is disposed with a first port and a second port, the first port is connected to the outside of the fixation part (10), the second port is situated in the mutation cavity (12);
**characterized in that**
the fixation part (10) is disposed with at least an explosion proof section and a suction section, the channel is disposed with a sealing unit (20), the sealing unit (20) is movably connected to the fixation part (10) and the sealing unit (20) moves between the explosion proof section and the suction section, a middle section is disposed between the explosion proof section and the suction section; when the waterway is open, negative pressure generates in the mutation section and works on the sealing unit (20) to make the sealing unit (20) moving from the middle section to the suction section, the channel is open for suction, wherein the channel has a first open area; when the waterway is blocked, the pressure of the waterway increases and works on the sealing unit (20) to make the sealing unit (20) moving from the suction unit to the explosion proof section, the channel is open to realize water and pressure discharge,
wherein the channel has a second open area,
and wherein the first open area is smaller than the second open area.

## Patentansprüche

1. Saug- und explosionsgeschützter Mechanismus für ein Wasserwegzubehör, der aufweist: einen Befestigungsteil (10), der mit einem Wasserweg und an wenigstens einem Kanal eingerichtet ist, wobei der Wasserweg mit wenigstens einem Zulaufloch (11) und einem Veränderungshohlraum (12), der mit dem Zulaufloch (11) verbunden ist, eingerichtet ist, wobei die Schnittfläche des Veränderungshohlraums (12) größer als die des Zulauflochs (11) ist; wobei der Kanal mit einer ersten Öffnung und einer zweiten Öffnung einrichtet ist, wobei die erste Öffnung mit der Außenseite des Befestigungsteils (10) verbunden ist, wobei die zweite Öffnung in dem Veränderungshohlraum (12) gelegen ist;
**dadurch gekennzeichnet, dass**
der Befestigungsteil (10) wenigstens mit einem explosionsgeschützten Abschnitt und einem Ansaugabschnitt eingerichtet ist,
wobei der Kanal mit einer Dichtungseinheit (20) eingerichtet ist, wobei die Dichtungseinheit (20) verformbar ist und beweglich im Inneren des Befestigungsteil (10) angeordnet ist, wobei die Dichtungseinheit (20) sich zwischen dem explosionsgeschützten Abschnitt und dem Ansaugabschnitt bewegen kann;
wenn der Wasserweg offen ist, die Dichtungseinheit (20) in dem Ansaugabschnitt gelegen ist, im Inneren des Veränderungshohlraums (12) ein negativer Druck entsteht und auf die Dichtungseinheit (20) wirkt, um die Dichtungseinheit (20) dazu zu bringen sich zu verformen, der Kanal zum Ansaugen offen ist, wobei der Kanal eine erste Freifläche hat;
wenn der Wasserweg gesperrt ist, der Druck des Wasserwegs zunimmt und auf die Dichtungseinheit (20) wirkt und der Kanal offen ist, um eine Wasser- und Druckabgabe zu realisieren, wenn die Dichtungseinheit (20) sich von dem Ansaugabschnitt zu dem explosionsgeschützten Abschnitt bewegt, wobei der Kanal eine zweite Freifläche hat;
und wobei die erste Freifläche kleiner als die zweite Freifläche ist.

2. Saug- und explosionsgeschützter Mechanismus für ein Wasserwegzubehör nach Anspruch 1, wobei ein elastischer Körper (30) zwischen der Befestigungseinheit und der Dichtungseinheit (20) angeordnet ist, wobei der elastische Körper (30) der Dichtungseinheit (20) widersteht, um eine elastische Kraft auf die Dichtungseinheit (20) zu erzeugen, und wobei die Kraftrichtung von dem explosionsgeschützten Abschnitt zu dem Ansaugabschnitt ist.

3. Saug- und explosionsgeschützter Mechanismus für ein Wasserwegzubehör nach Anspruch 1 und/oder 2, wobei der Befestigungsteil (10) mit einer Zulaufrohrleitung (13) und einem Gehäuse (14) versehen ist, wobei die Zulaufrohrleitung (13) im Inneren des Gehäuses (14) angeordnet ist, wobei ein Spielraum (16) zwischen der Zulaufrohrleitung (13) und dem Gehäuse (14) eingerichtet ist; wobei das Gehäuse (14) mit einem ersten Durchgangsloch (17) innen und außen eingerichtet ist, wobei die Zulaufrohrleitung (13) derart ausgebildet ist, dass sie der Wasserweg ist, wobei die Zulaufrohrleitung (13) mit einem zweiten Durchgangsloch (18) innen und außen eingerichtet ist, wobei der Kanal das zweite Durchgangsloch (18), das erste Durchgangsloch (17) und einen Teil des Spielraums (16) umfasst; wobei die Dichtungseinheit (20) entlang des Spielraums (16) gleitet.

4. Saug- und explosionsgeschützter Mechanismus für ein Wasserwegzubehör nach Anspruch 3, wobei die Dichtungseinheit (20) eine ringförmige Basis und eine verformbare ringförmige Dichtung (22) umfasst, wobei die ringförmige Dichtung (22) in der ringförmigen Basis montiert ist, wobei der Innenumfang der ringförmigen Dichtung (22) die Außenwand der Zulaufrohrleitung (13) abdichtet, wobei der Außenumfang der ringförmigen Dichtung (22) sich aus der Außenumdrehungsfläche der ringförmigen Basis heraus erstreckt und die Innenwand des Gehäuses (14) abdichtet.

5. Saug- und explosionsgeschützter Mechanismus für ein Wasserwegzubehör nach Anspruch 3 und/oder 4, wobei der Befestigungsteil (10) ferner eine Zulaufhülse (15) umfasst, die zwischen der Zulaufrohrleitung (13) und dem Gehäuse (14) angeschlossen ist, wobei der elastische Körper (30) zwischen der ringförmigen Basis und der Zulaufhülse (15) widersteht.

6. Saug- und explosionsgeschützter Mechanismus für ein Wasserwegzubehör nach einem oder mehreren der Ansprüche 3 bis 5, wobei die Innenwand des Gehäuses (14) mit einer ersten konischen Oberfläche (141) mit kleinem Ende nach unten versehen ist, wobei die Außenwand der ringförmigen Basis mit einer ersten konischen Oberfläche (211) eingerichtet ist, wobei die erste konische Oberfläche (141) parallel zu der zweiten konischen Oberfläche (211) ist.

7. Saug- und explosionsgeschützter Mechanismus für ein Wasserwegzubehör nach einem oder mehreren der Ansprüche 4 bis 6, wobei die untere Endseite der ringförmigen Basis mit einer Umlaufnut (23) eingerichtet ist, wobei die ringförmige Dichtung (22) eine Ledermanschette ist, wobei die Ledermanschette im Inneren der Umlaufnut (23) montiert ist und der Außenumfang der Ledermanschette sich aus der Unterseite der ringförmigen Basis erstreckt.

8. Saug- und explosionsgeschützter Mechanismus für ein Wasserwegzubehör nach Anspruch 3, Anspruch 4, Anspruch 5, Anspruch 6 und/oder Anspruch 7, wobei die Außenöffnung des ersten Durchgangslochs (17) die erste Öffnung ist; der Befestigungsteil (10) ferner einen äußeren Prüfring(19) umfasst, wobei der obere Umfang des äußeren Prüfrings (19) sich einwärts erstreckt, um einen Verbindungsring zu bilden, der in dem äußeren Umlauf des Gehäuses (14) befestigt ist, und wobei die erste Öffnung unterhalb des Verbindungsrings und im Inneren des äußeren Prüfrings (19) gelegen ist.

9. Saug- und explosionsgeschützter Mechanismus für ein Wasserwegzubehör nach Anspruch 3, Anspruch 4, Anspruch 5, Anspruch 6 und/oder Anspruch 7, wobei das Gehäuse (14) einen Säulenabschnitt und einen Kegelabschnitt unter dem Säulenabschnitt umfasst.

10. Saug- und explosionsgeschützter Mechanismus für ein Wasserwegzubehör, der aufweist: einen Befestigungsteil (10), der mit einem Wasserweg und wenigstens einem Kanal eingerichtet ist, wobei der Wasserweg mit wenigstens einem Zulaufloch (11) und einem Veränderungshohlraum (12), der mit dem Zulaufloch (11) verbunden ist, eingerichtet ist, wobei die Schnittfläche des Veränderungshohlraums (12) größer als die des Zulauflochs (11) ist; wobei der Kanal mit einer ersten Öffnung und einer zweiten Öffnung einrichtet ist, wobei die erste Öffnung mit außerhalb des Befestigungsteils (10) verbunden ist, wobei die zweite Öffnung in dem Veränderungshohlraum (12) gelegen ist;
**dadurch gekennzeichnet, dass**
der Befestigungsteil (10) wenigstens mit einem explosionsgeschützten Abschnitt und einem Ansaugabschnitt eingerichtet ist, der Kanal mit einer Dichtungseinheit (20) eingerichtet ist, wobei die Dichtungseinheit (20) beweglich mit dem Befestigungsteil (10) verbunden ist und die Dichtungseinheit (20) sich zwischen dem explosionsgeschützten Abschnitt und dem Ansaugabschnitt bewegt, wobei ein Mittelabschnitt zwischen dem explosionsgeschützten Abschnitt und dem Ansaugabschnitt eingerichtet ist; wenn der Wasserweg offen ist, in dem Veränderungsabschnitt ein negativer Druck entsteht und auf die Dichtungseinheit (20) wirkt, um die Dichtungseinheit (20) dazu zu bringen, sich von dem Mittelabschnitt zu dem Ansaugabschnitt zu bewegen, wobei der Kanal eine erste Freifläche hat;
wenn der Wasserweg gesperrt ist, der Druck des Wasserwegs zunimmt und auf die Dichtungseinheit (20) wirkt, um die Dichtungseinheit (20) dazu zu bringen, sich von der Ansaugeinheit zu dem explosionssicheren Abschnitt zu bewegen, wobei der Kanal offen ist, um eine Wasser- und Druckabgabe zu realisieren, wobei der Kanal eine zweite Freifläche hat;
und wobei die erste Freifläche kleiner als die zweite Freifläche ist.

## Revendications

1. Mécanisme d'aspiration et antidéflagrant pour un accessoire de conduite d'eau, comprenant une pièce de fixation (10) qui est pourvue d'une conduite d'eau et d'au moins un canal, la conduite d'eau étant pourvue d'au moins un perçage d'entrée (11) et d'une cavité de mutation (12) reliée au perçage d'entrée (11), l'aire de section de la cavité de mutation (12) étant plus grande que celle du perçage d'entrée (11) ; le canal étant pourvu d'un premier orifice et d'un second orifice, le premier orifice étant relié à l'extérieur de la pièce de fixation (10) tandis que le second orifice se trouve dans la cavité (12) de mutation ;
**caractérisé en ce que** la pièce de fixation (10) est au moins pourvue d'une section antidéflagrante et d'une section d'aspiration,
le canal étant pourvu d'une unité d'étanchéité (20), l'unité d'étanchéité (20) étant déformable et disposée, mobile, dans la pièce de fixation (10), l'unité d'étanchéité (20) pouvant se déplacer entre la section antidéflagrante et la section d'aspiration ;
quand la conduite d'eau est ouverte, l'unité d'étanchéité (20) se trouve dans la section d'aspiration, une pression négative se forme dans la cavité de mutation (12) et agit sur l'unité d'étanchéité (20) pour déformer celle-ci, la conduite est ouverte pour l'aspiration, le canal ayant une première zone ouverte ;
quand la conduite d'eau est bloquée, la pression de ladite conduite d'eau augmente et agit sur l'unité d'étanchéité (20), et le canal est ouvert pour réaliser une évacuation d'eau et de pression quand l'unité d'étanchéité (20) passe de la section d'aspiration à la section antidéflagrante, le canal ayant une seconde zone ouverte ;
et la première zone ouverte étant plus petite que la seconde zone ouverte.

2. Mécanisme d'aspiration et antidéflagrant pour un accessoire de conduite d'eau selon la revendication 1, dans lequel un corps élastique (30) est disposé entre l'unité de fixation et l'unité d'étanchéité (20), le corps élastique (30) rencontrant la résistance de l'unité d'étanchéité (20) pour produire une force élastique sur celle-ci, et la direction de la force va de la section antidéflagrante vers à section d'aspiration.

3. Mécanisme d'aspiration et antidéflagrant pour un accessoire de conduite d'eau selon la revendication 1 et/ou 2, dans lequel la pièce de fixation (10) est pourvue d'un tuyau d'entrée (13) et d'un boîtier (14), le tuyau d'entrée (13) est disposé dans le boîtier (14), un espace (16) est prévu entre le tuyau d'entrée (13) et le boîtier (14) ; le boîtier (14) est pourvu d'un premier perçage traversant (17) à l'intérieur et à l'extérieur, le tuyau d'entrée (13) est formé pour constituer la conduite d'eau, le tuyau d'entrée (13) est pourvu d'un second perçage traversant (18) à l'intérieur et à l'extérieur, la conduite contient le second perçage traversant (18), le premier perçage traversant (17) et une partie de l'espace (16) ; l'unité d'étanchéité (20) coulisse le long de l'espace (16).

4. Mécanisme d'aspiration et antidéflagrant pour un accessoire de conduite d'eau selon la revendication 3, dans lequel l'unité d'étanchéité (20) comprend une base annulaire et un joint annulaire déformable (22), le joint annulaire (22) est monté dans la base annulaire, la périphérie intérieure du joint annulaire (22) réalise l'étanchéité de la paroi extérieure du tuyau d'entrée (13), la périphérie extérieure du joint annulaire (22) s'étend hors de la surface de révolution extérieure de la base annulaire et réalise l'étanchéité de la paroi intérieure du boîtier (14).

5. Mécanisme d'aspiration et antidéflagrant pour un accessoire de conduite d'eau selon la revendication 3 et/ou 4, dans lequel la pièce de fixation (10) comprend également un manchon d'entrée (15) qui est monté entre le tuyau d'entrée (13) et le boîtier (14), le corps élastique (30) est monté entre la base annulaire et le manchon intérieur (15).

6. Mécanisme d'aspiration et antidéflagrant pour un accessoire de conduite d'eau selon l'une au moins des revendications 3 à 5, dans lequel la paroi intérieure du boîtier (14) est pourvue d'une première surface conique (141) avec sa petite extrémité en bas, la paroi extérieure de la base annulaire est pourvue d'une seconde surface conique (211), la première surface conique (141) est parallèle à la seconde surface conique (211).

7. Mécanisme d'aspiration et antidéflagrant pour un accessoire de conduite d'eau selon l'une au moins des revendications 4 à 6, dans lequel la face d'extrémité inférieure de la base annulaire est pourvue d'une rainure de révolution (23), le joint annulaire (22) est un joint en cuir, le joint en cuir est monté dans la rainure de révolution (23), et la périphérie extérieure du joint en cuir s'étend hors de l'extrémité inférieure de la base annulaire.

8. Mécanisme d'aspiration et antidéflagrant pour un accessoire de conduite d'eau selon la revendication 3, la revendication 4, la revendication 5, la revendication 6 et/ou la revendication 7, dans lequel l'orifice extérieur du premier perçage traversant (17) est le premier orifice ; la pièce de fixation (10) contient également une bague fendue (19), la périphérie supérieure de la bague fendue extérieure (19) s'étend vers l'intérieur, pour former une bague de raccordement qui est fixée dans la surface de révolution extérieure du boîtier (14), et le premier orifice se trouve sous la bague de raccordement et à l'intérieur de la bague fendue extérieure (19).

9. Mécanisme d'aspiration et antidéflagrant pour un accessoire de conduite d'eau selon la revendication 3, la revendication 4, la revendication 5, la revendication 6 et/ou la revendication 7, dans lequel le boîtier (14) comprend une section en forme de colonne et, sous celle-ci, une section sphérique.

10. Mécanisme d'aspiration et antidéflagrant pour un accessoire de conduite d'eau, comprenant une pièce de fixation (10) qui est pourvue d'une conduite d'eau et d'au moins un canal, la conduite d'eau étant pourvue d'au moins un perçage d'entrée (11) et d'une cavité de mutation (12) reliée au perçage d'entrée (11), l'aire de section de la cavité de mutation (12) étant plus grande que celle du perçage d'entrée (11) ; le canal étant pourvu d'un premier orifice et d'un second orifice, le premier orifice étant relié à l'extérieur de la pièce de fixation (10) tandis que le second orifice se trouve dans la cavité (12) de mutation ;
**caractérisé en ce que** la pièce de fixation (10) est pourvue d'au moins une section antidéflagrante et d'une section d'aspiration, le canal est pourvu d'une unité d'étanchéité (20), l'unité d'étanchéité (20) est reliée, mobile, à la pièce de fixation (10), et l'unité d'étanchéité (20) se déplace entre la section antidéflagrante et la section d'aspiration, une section centrale est disposée entre la section antidéflagrante et la section d'aspiration ; quand la conduite d'eau est ouverte, une pression négative se forme dans la section de mutation et agit sur l'unité d'étanchéité (20) pour faire passer celle-ci de ladite section centrale à la section d'aspiration, la conduite est ouverte pour l'aspiration, le canal ayant une première zone ouverte ;
quand la conduite d'eau est bloquée, la pression de ladite conduite d'eau augmente et agit sur l'unité d'étanchéité (20) pour faire passer celle-ci de la section d'aspiration à la section antidéflagrante, le canal est ouvert pour réaliser une évacuation d'eau et de pression, ledit canal ayant une seconde zone ouverte,
et la première zone ouverte étant plus petite que la seconde zone ouverte.
